# EUROPÄISCHE PATENTANMELDUNG

(11) **EP 4 703 321 A1**
(43) Veröffentlichungstag der Anmeldung: **04.03.2026**
(21) Anmeldenummer: 24197725.5
(22) Anmeldetag: 30.08.2024
(51) Int. Cl.: B82Y 10/00, G06N 10/00, H04L 9/08

(54) **ZUR WEITERGABE QUANTENMECHANISCH BASIERTER VERSCHRÄNKUNGSBEZIEHUNGEN AUSGEBILDETES NETZWERK**

(71) Anmelder: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Maucher Jenkins Patent- und Rechtsanwälte

(57) **Zusammenfassung**

Die Erfindung betrifft ein Netzwerk für eine Weitergabe von quantenmechanisch basierten Verschränkungsbeziehungen mit einem übergeordneten Netzwerkmanagement und einem optischen Quantennetzwerk, bestehend aus mehreren Netzwerkknoten (1₁, 1₂, ... 1ₙ) und mehreren, diese verbindenden optischen Quantenkanälen (2₁, 2₂, ...2ₘ). Das Netzwerk ist durch ein klassisches Netzwerk ergänzt, in welches jeder Netzwerkknoten (1₁, 1₂, ... 1ₙ) einbezogen ist. Jeder Netzwerkknoten (1₁, 1₂, ... 1ₙ) umfasst mindestens mehrere Quantenspeicher (3₁, 3₂, ...3ₖ) für Verschränkungszustände, eine passive optische N x N-Switchmatrix (4) mit mehreren Ein- und Ausgängen, über welche verschränkte, photonisch vermittelte Quantenzustände einem der Quantenspeicher (3₁, 3₂, ...3ₖ) zugeleitet werden, eine Einheit zur Durchführung von Bell-Zustandsmessungen BSMU (5₁, 5₂, ...5ₚ) für ein Entanglement Swapping und eine klassische Computereinrichtung (6), die dazu ausgebildet ist, die Quantenspeicher (3₁, 3₂, ...3ₖ) zur Auswahl einer jeweils weiterzugebenden Verschränkungsbeziehung und die BSMU (5₁, 5₂, ...5ₚ) zur Durchführung von Bell-Zustandsmessungen an den ausgewählten Verschränkungszuständen anzusteuern sowie das jeweilige Ergebnis der Messung zwei bis dahin nicht in einer Verschränkungsbeziehung stehenden Netzwerkknoten (1₁, 1₂, ... 1ₙ) zuzuleiten.

## Beschreibung

Die Erfindung betrifft ein System, nämlich ein in spezieller Weise zur Weitergabe quantenmechanisch basierter Verschränkungsbeziehungen ausgebildetes Netzwerk. Sie bezieht sich genauer gesagt auf ein Netzwerk, welches ein Quantennetzwerk umfasst, in welchem aufgrund photonisch vermittelter Verschränkungszustände zwischen Netzwerkknoten bestehende Verschränkungsbeziehungen auch über große Distanzen an bis dahin untereinander nicht in einer solchen Verschränkungsbeziehung stehende Netzwerkknoten weitergegeben werden können. In dem betreffenden Quantennetzwerk wird hierfür das Prinzip des Entanglement Swapping genutzt.

Gegenwärtig ist eine sich beschleunigende Entwicklung bei der Nutzung als solches schon länger bekannter quantenmechanischer Prinzipien in der Informations- und Kommunikationstechnik zu verzeichnen. So wird insbesondere verstärkt an der Entwicklung von Quantencomputern gearbeitet, welche künftig umfangreiche und komplexe Berechnungsvorgänge, aufgrund ihrer die Leistungsfähigkeit heutiger klassischer Hochleistungsrechner und Computernetzwerke bei weitem übertreffenden Performance, deutlich verkürzen können.

Gleichzeitig bringt die voranschreitende Entwicklung von Quantencomputern potenziell auch neue Risiken für die Sicherheit in der Informationstechnik mit sich. So ist beispielsweise davon auszugehen, dass bisher als sicher geltende Verschlüsselungstechniken gegenüber unter dem Einsatz vom Quantencomputern geführten Angriffen künftig nicht mehr sicher sind. Vor dem Hintergrund des letztgenannten Aspekts gewinnt daher die Quantenkryptografie, welche sich ebenfalls quantenmechanischer Prinzipien bedient, sehr stark an Bedeutung.

Hierbei bringen die in der Wirtschaft etablierte, teilweise sogar globale Arbeitsteiligkeit und der Bedarf an einer flächendeckenden Bereitstellung angriffssicherer Verschlüsselungsmechanismen das Erfordernis mit sich, Quantenzustände auch über große Distanzen zu vermitteln oder weiterzugeben. Dies gilt zumal auch Quantencomputer künftig untereinander oder mit anderen, quantenmechanische Effekte nutzenden Einheiten und Systemen, wie beispielsweise Quantensensoren, vernetzt sein werden.

In diesem Zusammenhang kommt der Erzeugung, der Verteilung, dem Nachweis und der Speicherung verschränkter photonischer Zustände in der über Netzwerke erfolgenden Kommunikation eine wachsende Bedeutung zu. Die vorgenannten Aspekte bilden gewissermaßen die Grundpfeiler für moderne, quantenmechanische Prinzipien nutzende Netzwerke respektive für ein künftig als Quanteninternet ausgestaltetes Internet. Allerdings können Quantenzustände, welche durch untereinander hinsichtlich dieser Quantenzustände verschränkte Photonen vermittelt werden, innerhalb von Netzwerken ohne weitere Maßnahmen nicht einfach über beliebige Distanzen von einem Netzwerkknoten zu einem zweiten und gegebenenfalls zu weiteren Netzwerkknoten übertragen werden.

Dies hängt unter anderem damit zusammen, dass Photonen, welche derartige quantenmechanische Verschränkungszustände vermitteln, in den Glasfasern eines ihrer Übertragung dienenden Netzwerks aufgrund der dabei auftretenden Dämpfung klar limitiert sind. Derzeit ist hierbei von Reichweiten von 1 bis 5 km respektive von höchstens 50 bis 80 km, bei der Nutzung eines einer Wellenlänge von 1.550 nm entsprechenden Frequenzbandes auszugehen. Andererseits können aber Quantenzustände aufgrund des no-cloning theorems nicht einfach kopiert werden, um sie respektive auf ihnen basierende Verschränkungsbeziehungen zwischen Netzwerkknoten beispielsweise unter Nutzung von Transitknoten innerhalb eines Netzwerks weiterzugeben. Eine Weitergabe auf quantenmechanischen Verschränkungszuständen basierenden Verschränkungsbeziehungen ist aber durch die Nutzung des Prinzips des Entanglement Swapping möglich.

Im Hinblick auf die Effizienz und unter Berücksichtigung zwischen Netzwerkknoten typischerweise bestehender Entfernungen gilt es jedoch, eine Netzinfrastruktur zu schaffen, welche die Nutzung des Prinzips des Entanglement Swapping mit möglichst geringen Dämpfungsverlusten zulässt. Aufgabe der Erfindung ist es daher, ein diesen Erfordernissen Rechnung tragendes Netzwerk bereitzustellen.

Die Aufgabe wird durch ein Netzwerk mit den Merkmalen des Patentanspruchs 1 gelöst. Vorteilhafte Aus- und Weiterbildungen der Erfindung sind durch die Unteransprüche gegeben.

Das zur Lösung der Aufgabe vorgeschlagene Netzwerk umfasst ein übergeordnetes Netzwerkmanagement mit entsprechenden technischen Netzwerkeinrichtungen und ein optisches Quantennetzwerk, über welches quantenmechanisch basierte Verschränkungsbeziehungen weitergegeben werden. Das Quantennetzwerk besteht aus mehreren Netzwerkknoten und aus mehreren, diese verbindenden optischen Quantenkanälen. Diese Quantenkanäle sind hierbei typischerweise durch Glasfaserverbindungen realisiert. Zu jedem der Quantenkanäle gehört dabei stets ein klassischer Protokollkanal, zu welchem zwar im Weiteren keine näheren Ausführungen erfolgen sollen, der aber auch ohne ausdrückliche Erwähnung stets mitzulesen ist, soweit nachfolgend und in den Patentansprüchen von einem Quantenkanal gesprochen wird. An dieser Stelle sei lediglich erwähnt, dass auch dieser, wie gesagt, in Verbindung mit einem Quantenkanal stets mitzulesende klassische Protokollkanal typischerweise ein optischer Kanal ist.

Das einen wesentlichen Bestandteil des hier betrachteten Gesamtnetzwerks ausbildende optische Quantennetzwerk zeichnet sich insbesondere dadurch aus, dass jeder seiner Netzwerkknoten mit mindestens einem anderen Netzwerkknoten des Quantennetzwerks in mindestens einer, aufgrund eines photonisch vermittelten quantenmechanischen Verschränkungszustands bestehenden Verschränkungsbeziehung steht. In diesem Zusammenhang soll zunächst außer Betracht bleiben, in welcher Weise die zwischen Netzwerkknoten des Quantennetzwerks bestehenden Verschränkungsbeziehungen ursprünglich entstanden sind respektive in dem Quantennetzwerk erzeugt wurden. Dies steht letztlich auch nicht im Fokus der hier betrachteten und nachfolgend noch weiter erläuterten technischen Lösung.

Sinn und Zweck dieser Lösung ist es vielmehr, in dem Netzwerk grundsätzlich bereits existierende Verschränkungsbeziehungen auch zwischen Netzwerkknoten des Quantennetzwerks herzustellen, welche ursprünglich nicht in einer solchen Verschränkungsbeziehung stehen. Demnach geht es darum, zwischen Netzwerkknoten des Quantennetzwerks bereits bestehende Verschränkungsbeziehungen, unabhängig von der Art ihrer ursprünglichen Entstehung, an andere, bis dahin nicht in einer solchen Beziehung stehende Netzwerkknoten des Quantennetzwerks weiterzugeben. Erst im Zusammenhang mit möglichen Ausbildungsformen des zur Lösung der Aufgabe vorgeschlagenen Netzwerks wird beispielhaft auf Möglichkeiten der Erzeugung von Verschränkungszuständen und über sie bestehender Verschränkungsbeziehungen eingegangen werden.

Um die Weitergabe von Verschränkungsbeziehungen in dem Quantennetzwerk zu ermöglichen, umfasst das zur Lösung der Aufgabe vorgeschlagene Netzwerk neben diesem bereits etwas genauer betrachteten Quantennetzwerk und dem übergeordneten Netzwerkmanagement, gewissermaßen ergänzend, ein klassisches Netzwerk. Dieses klassische Netzwerk ist jedoch nicht zu verwechseln mit den bereits angesprochenen, den Quantenkanälen des Quantennetzwerks zugeordneten klassischen Protokollkanälen. Allerdings ist jeder Netzwerkknoten des Quantennetzwerks auch in dieses klassische Netzwerk einbezogen, wobei Letzteres darüber hinaus auch noch weitere, andere Funktionen und Aufgaben erfüllende Netzwerkknoten umfassen kann. Die Einbeziehung der Netzwerkknoten des Quantennetzwerks in das ergänzende klassische Netzwerk erfolgt insbesondere dadurch, dass alle Netzwerkknoten des optischen Quantennetzwerks eine klassische Computereinrichtung umfassen und diese klassischen Computereinrichtungen der Netzwerkknoten über das klassische Netzwerk miteinander verbunden sind.

Jeder der Netzwerkknoten des Quantennetzwerks weist zudem mehrere Quantenspeicher zur temporären Speicherung verschränkter, photonisch vermittelter Quantenzustände auf. Ein jeweiliger verschränkter Quantenzustand wird in einem der mehreren Quantenspeicher eines Netzwerkknotens des Quantennetzwerks jeweils in Zuordnung zu einem ihn eindeutig bezeichnenden Identifikator temporär gespeichert. Ein entsprechender Identifikator kann beispielsweise durch die Kombination des Zeitschlitzes, in welchem das den Verschränkungszustand vermittelnde Photon bei einem jeweiligen Netzwerkknoten eintrifft, mit einem Kennzeichen des verwendeten Quantenkanals erzeugt werden.

Für die Speicherung von Verschränkungszuständen kommen dabei unterschiedliche Möglichkeiten in Betracht, da zwar Verschränkungszustände in dem optische Quantenkanäle zur Verbindung seiner Netzwerkknoten aufweisenden Quantennetzwerk photonisch vermittelt werden, jedoch grundsätzlich zwischen Photonen untereinander, aber auch zwischen Photonen und anderen Teilchen (ein Photon kann aufgrund des Welle-Teilchen-Dualismus des Lichtes auch als Teilchen angesehen werden), wie Atomen oder Molekülen, bestehen können.

Ein weiterer wichtiger, in allen Netzwerkknoten des Quantennetzwerks angeordneter Bestandteil des vorgeschlagenen Systems ist eine mehrere Eingänge und mehrere Ausgängen aufweisende passive optische N x N-Switchmatrix. Über diese optische N x N-Switchmatrix werden verschränkte, photonisch vermittelte Quantenzustände entsprechend einer für diese Switchmatrix konfigurierten Verschaltung ihrer Ein- und Ausgänge in zuvor angesprochenen Quantenspeichern des Netzwerkknotens unmittelbar oder mittelbar (zum Beispiel über die N XN OSM und einen dieser nachfolgenden Demultiplexer) zugeleitet. Die N x N-Switchmatrix (im Weiteren auch OSM, mit OSM = Optical Switch Matrix) hat insofern einen optisch rein passiven Charakter, als Quantenzustände sie passierender Photonen und zwischen diesen bestehende Verschränkungen durch das Passieren der Matrix nicht zerstört werden. Soweit nachfolgend und in den Patentansprüchen von einer N x N-Switchmatrix respektive von einer optischen N x N-Switchmatrix oder einer N x N OSM oder gar nur von einer OSM gesprochen wird, handelt es sich dabei stets um eine passive Switchmatrix, auch wenn diese nicht explizit als passiv bezeichnet wird.

Grundsätzlich wäre anstelle der passiven optischen N x N-Switchmatrix auch die Verwendung eines AWG (Arrayed Waveguide Grating) als gewissermaßen frequenzabhängiger Router denkbar. Jedoch hat die erfindungsgemäß verwendete OSM demgegenüber den Vorteil einer deutlich geringeren Einfügedämpfung. Im Gegensatz zur passiven und frequenzunabhängig variable schaltenden N x N-OSM mit geringen Einfügedämpfungen von ca. 1 dB, routed ein N x N AWG die Wellenlängenkanäle frequenzabhängig optisch passiv, wobei aber an diesem eine Einfügedämpfung von ca. 10 dB auftreten kann.

Ein weiterer wichtiger Bestandteil aller, wie gesagt auch zu dem ergänzenden klassischen Netzwerk gehörenden Netzwerkknoten des Quantennetzwerks ist eine Einheit zur Durchführung von Bell-Zustandsmessungen (Bell-State-Messungen respektive Bell State Measurement) für ein Entanglement Swapping. Die vorgenannte Einheit wird im Weiteren auch mit BSMU (Bell State Measurement Unit) bezeichnet.

Wie bereits ausgeführt, gehört zu jedem der Netzwerkknoten des Quantennetzwerks eine klassische Computereinrichtung, welche mit entsprechenden klassischen Computereinrichtungen der anderen Netzwerkknoten des Quantennetzwerks über das ergänzende klassische Netzwerk verbunden ist. Ein jede solche, klassische Computereinrichtung ist dabei dazu ausgebildet und eingerichtet, im Zusammenwirken mit den Einrichtungen des übergeordneten Netzwerkmanagements die mindestens eine BSMU und die Quantenspeicher des betreffenden Netzwerkknotens zur Verwendung in diesen gespeicherter, verschränkter Quantenzustände für die Weitergabe von Verschränkungsbeziehungen durch Entanglement Swapping anzusteuern.

Ferner ist diese klassische Computereinrichtung dazu ausgebildet und eingerichtet, das Ergebnis einer jeweiligen, für ein Entanglement Swapping ausgeführten Bell-Zustandsmessung entsprechend einer durch Einrichtungen des übergeordneten Netzwerkmanagements festgelegten Route mindestens zwei bis dahin untereinander nicht in einer Verschränkungsbeziehung stehende Netzwerkknoten über klassische Protokollkanäle des Quantennetzwerks zuleiten. Letzteres führt dabei schließlich zur Weitergabe respektive zum Swapping einer jeweiligen Verschränkungsbeziehung auf die bis dahin nicht in einer solchen Beziehung stehenden Netzwerkknoten.

In dem hier beschriebenen und beanspruchten Netzwerk (System) erfolgt die Weitergabe von Verschränkungsbeziehungen zwischen den Netzwerkknoten des Quantennetzwerks, entsprechend der Konfiguration des Netzwerks, nämlich insbesondere entsprechend den jeweiligen Verschaltungszuständen der N x N OSMs in den Netzwerkknoten, gewissermaßen über starr festgelegte Routen. Zwar werden diese Routen für die Konfigurierung des Netzwerks selbstverständlich im Vorfeld entsprechend insoweit als vorteilhaft anzusehender Kriterien, vorzugsweise unter Einsatz eines geeigneten Routing-Algorithmus festgelegt. Jedoch erfolgt kein dynamisches Routing während des Netzwerkbetriebs. Indes schließt dies ein jederzeit mögliches Umkonfigurieren - vorzugsweise remote mit Hilfe des übergeordneten Netzmanagements nicht aus. Allerdings gilt es dabei zu beachten, dass die Eigenfrequenzen der Netzwerkelemente beziehungsweise die von ihnen unterstützen Frequenzen stets zueinander passen oder aber - beispielsweise mittels Frequenzkonvertern zumindest aneinander anpassbar sein müssen. Insoweit erfolgen derartige Umkonfigurierungs- oder Rekonfigurierungsvorgänge eher nicht im Zuge eines dynamischen Geschehens, also eher nicht während des regulären Betriebs.

Insbesondere mit Blick auf die letzten Ausführungen, kann es sich bei der in einem jeweiligen Netzwerkknoten des Quantennetzwerks angeordneten OSM (optischen N x N-Switchmatrix) vorteilhafterweise um eine aktiv schaltbare, nichtblockierende Switchmatrix handeln. Durch den Einsatz einer solchen aktiv schaltbaren OSM in den einzelnen Netzwerkknoten ist das Quantennetzwerk, einschließlich der Verschaltung der Ein- und Ausgänge der jeweiligen von den Netzwerkknoten umfassten OSM, mittels Einrichtungen des übergeordneten Netzwerkmanagements nach dem Prinzip des Software Defined Networking (SDN) rekonfigurierbar.

Das heißt, im Falle einer Erweiterung oder Umgestaltung des Netzwerks, nämlich insbesondere seines Quantennetzwerks, kann dem dadurch Rechnung getragen werden, dass mittels entsprechender Einrichtungen des Netzwerkmanagements softwaregesteuert, nämlich über das ergänzende klassische Netzwerk, die Verschaltung der Ein- und Ausgänge der N x N-OSM eines oder mehrerer der Netzwerkknoten angepasst wird. Hierdurch wird erreicht, dass auch bei Änderungen am Netzwerk sichergestellt bleibt, dass beliebige, zwischen Netzwerkknoten des Quantennetzwerks bereits bestehende Verschränkungsbeziehungen an beliebige andere, bis dahin untereinander nicht in einer solchen Verschränkungsbeziehung stehende Netzwerkknoten weitergegeben werden können. Wie bereits ausgeführt, wird eine entsprechende Rekonfiguration eher nicht während des regulären Betriebs des Netzwerks, aber zumindest des hiervon betroffenen Netzwerkabschnitts erfolgen.

Die Bedarfe an verschränkten Zuständen zwischen unterschiedlichen Netzwercknoten sind dem Kontrollsystem respektive dem übergeordneten Netzwerkmanagement bekannt. Um diese zu erfüllen, müssen alle Komponenten (OSM, Photonenfrequenzen, Frequenzen der Quantenspeicher) aufeinander abgestimmt werden. Diese Koordination wird nach dem Prinzip eines SDN (Software Defined Network) erfolgen, welches bedarfsgerecht das quantenklassische Netzwerk konfiguriert, um optimale Ausbeute bei der Verschränkungsverteilung zu erhalten.

Der eingangs beschriebene grundsätzliche Aufbau des zur Lösung der Aufgabe vorgeschlagenen Netzwerks ist, wie bereits ausgeführt, unabhängig davon, in welcher Weise Verschränkungszustände und zwischen Netzwerkknoten des Quantennetzwerks bestehende Verschränkungsbeziehungen ursprünglich erzeugt rezeptive generiert werden. Jedoch sei an dieser Stelle darauf hingewiesen, dass eine Möglichkeit darin besteht, in dem Netzwerk zumindest eine Photonenquelle anzuordnen, welche dazu ausgebildet ist, Paare von Einzelphotonen zu erzeugen und auszusenden, die hinsichtlich eines Quantenzustands verschränkt sind. Eine solche Photonenquelle kann dabei innerhalb eines aus zwei Netzwerkknoten und einen sie miteinander verbindenden Quantenkanal bestehenden Quantenlinks angeordnet sein.

Die Ausbildung ist dabei derart, dass die betreffende Photonenquelle an jeden der beiden zu dem Quantenlink gehörenden Netzwerkknoten jeweils ein Photon eines von ihr erzeugten, hinsichtlich eines Quantenzustands untereinander verschränkten Photonenpaars einer bestimmten Frequenz aussendet. Eine entsprechende Ausbildungsform des erfindungsgemäßen Netzwerks umfasst dabei auch die Möglichkeit, dass die vorgenannte mindestens eine Photonenquelle innerhalb eines der Netzwerkknoten eines entsprechenden Quantenlinks angeordnet ist. Soweit vorstehend davon gesprochen wurde, dass die betreffende Photonenquelle jeweils ein Photon eines jeden von ihr erzeugten Photonenpaars mit hinsichtlich eines Quantenzustands verschränkten Photonen an beide Netzwerkknoten des Quantenlinks aussendet, meint dies im letztgenannten Fall, dass das jeweilige Photon des Photonenpaars in dem die Photonenquelle aufnehmenden Netzwerkknoten einem Eingang der N x N-OSM dieses Netzwerkknotens zugeleitet wird.

Darüber hinaus kann innerhalb eines ersten Netzwerkknotens ein gleichzeitig auch als Quantenquelle fungierender Quantenspeicher ausgebildet sein. Ein jeweiliger durch diesen erzeugter Quantenzustand wird in dem betreffenden Quantenspeicher unmittelbar persistiert. Gleichzeitig wird durch den Quantenspeicher ein hinsichtlich eines Quantenzustands mit dem persistierten Quantenzustand verschränktes Photon über einen Quantenkanal an einen anderen respektive zweiten Netzwerkknoten ausgesendet und somit durch den dieses Photon aussendenden ersten Netzwerkknoten eine Verschränkungsbeziehung zu dem zweiten, dieses Photon empfangenden Netzwerkknoten hergestellt. Ein derartiger, auch als Quantenquelle fungierender Quantenspeicher kann beispielsweise mittels eines Diamantenpunkts oder Quantenpunkts realisiert werden, welcher durch einen Laser fortwährend zur Erzeugung verschränkter Quantenzustände angeregt wird.

Die in dem optischen Quantennetzwerk über entsprechende Verschränkungszustände zwischen Netzwerkknoten bestehenden Verschränkungsbeziehungen können durch Photonenpaare unterschiedlicher Wellenlänge und somit unterschiedlicher Frequenz vermittelt werden. Unter praktischen Gesichtspunkten wird eine Verwendung von Photonenpaaren unterschiedlicher Wellenlänge sicherlich sogar typisch sein, wobei die Wellenlänge eines Photonenpaares zweier hinsichtlich eines Quantenzustands miteinander verschränkter Photonen aber jeweils dieselbe ist. Unterschiede in der Wellenlänge bestehen vielmehr zwischen verschiedenen Photonenpaaren. In einem entsprechenden Netzwerk, in welchen unterschiedliche Wellenlängen zum Einsatz gelangen, unterscheiden sich die mehreren, in einem jeweiligen Netzwerkknoten angeordneten Quantenspeicher hinsichtlich ihrer Speicherfrequenz voneinander.

Die letzten Ausführungen lassen erkennen, dass gegebenenfalls aber auch die Verwendung nur einer Wellenlänge für die quantenmechanisch basierten Verschränkungsbeziehungen zwischen Netzwerkknoten des Quantennetzwerks vermittelnden Photonen grundsätzlich auch in Betracht kommt, wobei sich dann aber die mehreren Quantenspeicher eines jeweiligen Netzwerkknotens hinsichtlich ihrer Speicherfrequenz nicht voneinander unterscheiden werden. In diesem Falle können beispielsweise photonische Verschränkungszustände (und die jeweils zugehörigen Identifikatoren), über welche ein jeweiliger Netzwerkknoten mit unterschiedlichen Netzwerkknoten des Quantennetzwerks jeweils in einer Verschränkungsbeziehung steht, in Abhängigkeit davon, zu welchem der anderen Netzwerkknoten durch einen jeweiligen Verschränkungszustand eine Verschränkungsbeziehung etabliert wird, durch die N x N-OSM unterschiedlichen Quantenspeichern des jeweiligen Netzwerkknotens zugeleitet werden.

Wie bereits ausgeführt, dürften jedoch typischerweise Photonen unterschiedlicher Wellenlänge und ein hierfür ausgebildetes Netzwerk in der Praxis zum Einsatz kommen. Im Hinblick auf eine effektive Verwendung der Ressourcen kann es dabei vorgesehen sein, dass Verschränkungszustände durch Photonen unterschiedlicher Wellenlängen gemeinsam über einen Quantenkanal vermittelt werden. Hierbei weisen dann die Netzwerkknoten des Quantennetzwerks jeweils einen passiven optischen Multiplexer auf, der dazu ausgebildet ist, quantenmechanische Verschränkungszustände vermittelnde Photonen unterschiedlicher Wellenlänge nach dem Prinzip des Dense Wavelength Division Multiplexing DWDM zusammenzuführen und demselben, den jeweiligen Netzwerkknoten mit einem anderen Netzwerkknoten des Quantennetzwerks verbindenden Quantenkanal als Wellenlängenmultiplex-Signal zuzuführen. Darüber hinaus weisen die Netzwerkknoten hierbei eine der Zahl der Ausgangsports ihrer N x N-Switchmatrix entsprechende Anzahl von passiven optischen Demultiplexern auf. Die Ausgänge dieser Demultiplexer, welche bei den Netzwerkknoten eingehende sowie dessen N x N-Switchmatrix passierende Wellenlängenmultiplex-Signale zur photonischen Vermittlung von Verschränkungszuständen wieder in Einzelsignale jeweils unterschiedlicher Photonenwellenlänge zerlegen, sind hierbei mit den verschiedenen Quantenspeichern entsprechend deren jeweiliger Speicherfrequenz wellenlängenrichtig verschaltet. Verschränkungsbeziehungen werden durch die jeweiligen Multiplexer und Demultiplexer nicht zerstört, da diese optisch passiv sind.

Insbesondere dann, wenn, wie zuvor thematisiert, Photonen unterschiedlicher Wellenlänge zur Vermittlung der Verschränkungsbeziehungen zum Einsatz gelangen und demgemäß in den Netzwerkknoten Quantenspeicher unterschiedlicher Speicherfrequenz angeordnet sind, können zwischen den Ausgängen der N x N-Switchmatrix und den Quantenspeichern oder - im Falle der Nutzung der DWDM und des Vorhandenseins entsprechender Demultiplexer in den Netzwercknoten - zwischen den Ausgängen der Demultiplexer und den Quantenspeichern Frequenzkonverter angeordnet sein.

Im Hinblick darauf, dass typischerweise zumindest die gegenwärtig verwendeten Glasfasern einerseits und derzeit beziehungsweise in absehbarer Zeit zur Verfügung stehende Quantenspeicher typischerweise auf unterschiedlichen Frequenzen respektive Wellenlängen arbeiten, - die Quantenspeicher auf 700 nm bis 800 nm und die Glasfasern auf 1.550 nm -, können aber auch dann, wenn in dem vorgestellten Netzwerk respektive in dessen Quantennetzwerk nur Photonen einer Wellenlänge zum Einsatz gelangen, von den Netzwerkknoten des Quantennetzwerks jeweils mehrere Frequenzkonverter umfasst sein. In jedem Falle sind in den Netzwerkknoten angeordnete Frequenzkonverter derart ausgebildet, dass eine durch sie bewirkte Veränderung der Frequenz eines hinsichtlich eines Quantenzustandes mit einem anderen Photon verschränkten Photons ohne Beeinflussung, das heißt unter Beibehaltung dieses Verschränkungszustandes, erfolgt.

Die in den einzelnen Netzwerkknoten des Quantennetzwerks vorhandenen Quantenspeicher können unter Nutzung unterschiedlicher, dafür zur Verfügung stehender Prinzipien ausgebildet sein. So kann es sich beispielsweise bei mindestens einem dieser Quantenspeicher um eine Atomfalle handeln, zum Beispiel in Form einer Pauli-Falle. Möglich ist aber grundsätzlich auch eine optisch basierte Speicherung, bei welcher ein einen verschränkten Quantenzustand vermittelndes Photon einem in einem Netzwerkknoten angeordneten Glasfaserabschnitt (zum Beispiel sich auf einer Trommel befindende Glasfaser) zugeführt wird, welcher als eine konfigurierbare optische Verzögerungsstrecke fungiert und damit das Photon und den durch dieses vermittelten Quantenzustand temporär, das heißt kurzzeitig, speichert.

Über das durch die Patentansprüche hinsichtlich seiner Ausprägung charakterisierte sowie vorstehend beschriebene Netzwerk können Informationen durch QuBits mittels zwischen Photonen bestehender quantenmechanischer Verschränkungszustände unter Nutzung unterschiedlicher Übertragungsprotokolle übermittelt werden. So ist eine Informationsübermittlung beispielsweise unter Nutzung eines Protokolls zur Quantenteleportation möglich. Andere in Betracht kommende Protokolle können zur Informationsübertragung ferner das Prinzip des Super Dense Coding verwenden. Das letztgenannte Prinzip ermöglicht es hierbei, gleichzeitig zwei herkömmliche digitale Bits durch die Übertragung nur eines QuBits zwischen zwei Netzwerkknoten in dem Quantennetzwerk zu übertragen. Die insoweit entwickelten Protokolle bedienen sich, wie bereits ausgeführt, jeweils zwischen Netzwerkknoten des Quantennetzwerks bestehender photonisch vermittelter Verschränkungsbeziehungen.

Wie die vorstehenden Ausführungen verdeutlichen, erfolgt bei der vorgeschlagenen Lösung die Weitergabe quantenmechanisch basierter Verschränkungsbeziehungen zwischen den Netzwerkknoten des Quantennetzwerks nicht im Wege eines dynamischen Routings, sondern im Rahmen einer bestehenden Konfiguration des Netzwerks über statische Wege, nämlich über statische Quantenlinks. Solche statischen Quantenlinks haben folgende Vorteile:
- Ein Ende-zu-Ende Quanten Link pro optischer Wellenlänge
- Reduzierte technischen Anforderungen an Quantenspeicher und weniger Verschränkungszustände, die in einem Quantenspeicher vorgehalten werden müssten.
- Einfachere Kontrolle der Quantenzustände, da über die Wellenlänge schon der korrekte Verschränkungspartner selektiert wird. Es müssen lediglich die zueinander Verschränkungszustände aus den lokalen Speichern selektiert werden.
- Einfacherer Zugriff der Quantenprotokollapplikationen auf die verschränkten quantenmechanischen Zustände.

Statische Quantenlinks sind dabei besonders vorteilhaft innerhalb einer bestimmten Netzwerkklasse. Dieser Netzwerkklasse können insbesondere folgende Netzwerke zugerechnet werden:
- Weitverkehrsnetzwerke und optische Kernnetze (Tier 1). Diese bestehen in Deutschland aus ca. 24 Netzwerkknoten, welche ihre Größe nur in Ausnahmefällen ändern - diese ließen sich mit 276 Quantenkanälen leicht integrieren, zumal drei physikalische Fasern bei Nutzung von 96 50GHz-Kanälen für 96 Knoten rein rechnerisch zur Realisierung ausreichen würden. (Es würden bei 96 Knoten 96 x 50 GHz Bänder verschaltet. Diese 50 GHz-Bänder könnte man weiter unterteilen, zum Beispiel in 8 x 6,25 GHz oder 4 × 12,5 GHz oder 2 × 25 GHz. Damit bräuchte man wieder nur eine Glasfaser für das Quantennetzwerk, zwischen den Netzwerkknoten).
- Regionale Netzwerke (Tier 2). Diese bestehen aus bis zu 50 Netzwerkknoten, die an das Weitverkehrsnetzwerk angeschlossen sind. Auch hier sind die 1225 Netzwerkverbindungen noch realistisch über 96 × 50 GHz-Kanäle zu integrieren.
- Access Netzwerke. Diese versorgen eine deutlich größere Anzahl an Anschlusspunkten (FTTH, Fiber-To-The-Home), ca. 1000, mit einem Anschlussknoten. Hier ist allerdings zu beachten, dass die Anschlusspunkte nicht notwendigerweise direkt miteinander kommunizieren können, so dass hier 1000 Quantenkanäle ausreichten.

Bei der zuvor betrachteten Netzwerkklasse beziehungsweise bei den genannten Netzwerken fallen gewisse Nachteile statischer Quantenlinks, wie eine schwierige Skalierbarkeit oder der Umstand, dass die Anzahl der Quantenkanäle mit N(N-1)/2 quadratisch mit der Anzahl der miteinander in einer Verschränkungsbeziehung stehenden Netzwerkknoten wächst oder dass die Photonenquellen, Quantenspeicher und die Bell-Zustandsmessungen auf die unterschiedlichen Wellenlängen angepasst, das heißt schlimmstenfalls dupliziert werden müssen, was größere Mengen an technischem Equipment bedingt und damit höhere Kosten verursacht, weniger ins Gewicht.

Anhand von Zeichnungen soll nachfolgend nochmals auf einige Aspekte der vorgestellten Erfindung eingegangen werden.

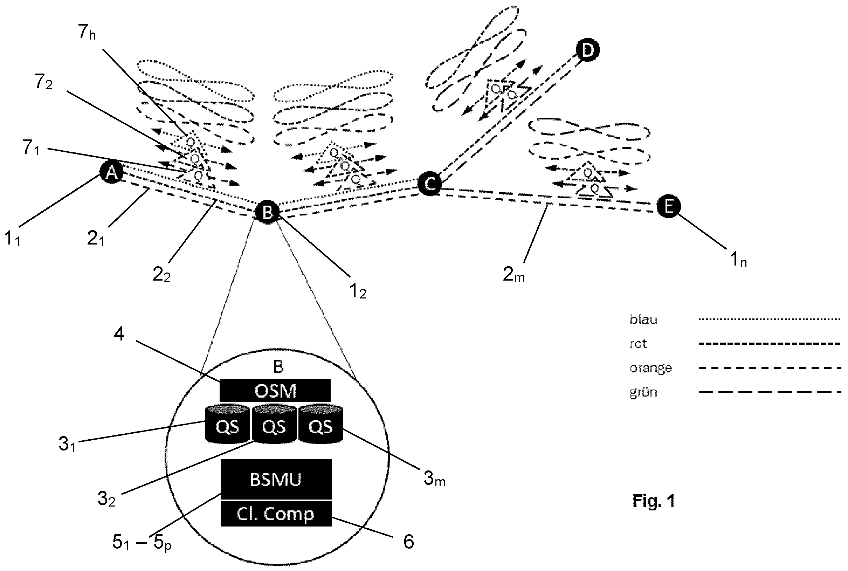

Hierbei zeigt die Fig. 1 beispielhaft die zwischen fünf Netzwerkknoten 1₁, 1₂, ... 1ₙ (hier Netzwerkknoten A bis E) eines Quantennetzwerks respektive zwischen Netzwerkknoten 1₁, 1₂, ... 1ₙ eines Ausschnitts eines solchen Quantennetzwerks bestehenden Verschränkungsbeziehungen. In dem gezeigten Beispiel wird davon ausgegangen, dass die insoweit zwischen den Netzwerkknoten 1₁, 1₂, ... 1ₙ bestehenden Verschränkungsbeziehungen aufgrund von Verschränkungszuständen bestehen, die in dem Quantennetzwerk durch Photonen unterschiedlicher Lichtwellenlänge (Frequenz) vermittelt werden. Beispielsweise kommen hierbei Photonen zum Einsatz, deren Wellenlängen, gemäß der in der Fig. angegebenen Agenda, den Farben Rot, Grün, Blau und Orange entsprechen.

Wie aus der Fig. 1 ersichtlich, bestehen in dem hier betrachteten Beispiel einerseits zwischen dem Netzwerkknoten A und dem Netzwerkknoten B sowie andererseits zwischen dem Netzwerkknoten C und dem Netzwerkknoten B Verschränkungsbeziehungen, welche durch Photonen dreier unterschiedlicher Wellenlängen vermittelt werden. Beispielhaft ist für den Netzwerkknoten B in Form einer herausgezogenen Detaildarstellung ein grobes Schema seines Aufbaus respektive der von diesem Netzwerkknoten umfassten Komponenten gezeigt.

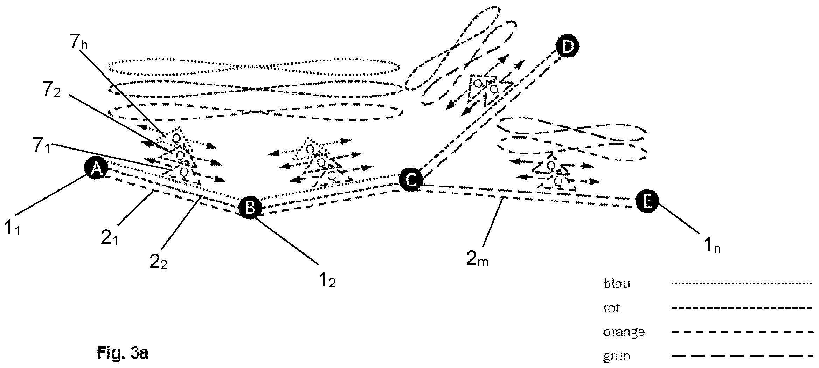

Demnach weist der Netzwerkknoten insbesondere eine N x N optische Switchmatrix 4 (N x N-OSM), drei Quantenspeicher 3₁, 3₂, ...3ₖ (QS), mindestens eine Einheit zur Durchführung von Bell-Zustandsmessung 5 (BSMU) - hier sind es mehrere, durch ein gemeinsames Symbol dargestellte BSMUs 5₁ - 5ₚ - und eine klassische Computereinrichtung 6 (CI. Comp) auf. Durch seine Ausgestaltung ist der Netzwerkknoten B dazu ausgebildet, im Wege des Entanglement Swapping die zwischen ihm und einerseits dem Netzwerkknoten A sowie andererseits dem Netzwerkknoten C bestehenden Verschränkungsbeziehungen in der Weise weiterzugeben (zu swappen), dass im Ergebnis eines entsprechenden Entanglement Swapping-Vorgangs zwischen den bis dahin nicht in einer Verschränkungsbeziehung stehenden Netzwerkknoten A und C, in den drei genannten Farben vermittelte photonische Verschränkungsbeziehungen etabliert werden. Das soeben beschriebene Ergebnis entsprechender Entanglement Swapping-Vorgänge ist in einer Symboldarstellung in der später noch genauer zu besprechenden Fig. 3a dargestellt.

Bei der Darstellung gemäß der Fig. 1 wird davon ausgegangen, dass die durch die Photonen unterschiedlicher Wellenlänge zwischen den Netzwerkknoten 1₁, 1₂, ... 1ₙ jeweils vermittelten Verschränkungszustände unter Nutzung mehrerer, je einen Quantenkanal 2₁, 2₂, ...2ₘ für eine Wellenlänge ausbildender Glasfasern vermittelt werden. Die in dem Beispiel durch Photonen je einer der den Farben Rot, Blau und Orange entsprechenden Wellenlängen über drei Glasfasern (Quantenkanäle) vermittelten Verschränkungszustände zwischen den Netzwercknoten A und B laufen in dem Netzwerkknoten B an unterschiedlichen Eingangsports (Pᵢₙ) der dort angeordneten N x N OSM 4 auf. Aufgrund der durch Photonen vermittelten, in der Darstellung durch Schleifen symbolisierten Verschränkungszustände bestehen beispielsweise zunächst einerseits zwischen dem Netzwerkknoten A und dem Netzwerkknoten B und andererseits zwischen dem Netzwerkknoten C und dem Netzwerkknoten B Verschränkungsbeziehungen. Die unterschiedlichen Wellenlängen/Frequenzen der Photonen, das heißt die verschiedenen Lichtfarben sowie diese jeweiligen Wellenlängen übertragenden Quantenkanäle werden durch unterschiedliche Linienarten gemäß der Legende symbolisiert.

Aufgrund einer mit der Konfiguration des Netzwerks festgelegten Verschaltung der betreffenden Eingangsports der N x N OSM 4 werden die in den verschiedenen Farben vermittelten Verschränkungszustände über unterschiedliche Ausgangsports (Pₒᵤₜ) der N x N OSM 4 und dann schließlich frequenzselektiv unterschiedlichen Quantenspeichern 3₁, 3₂, ...3ₖ in dem Netzwerkknoten B zugeführt. In den Quantenspeichern 3₁, 3₂, ...3ₖ werden die betreffenden Verschränkungszustände unter Zuordnung zu einem sie jeweils identifizierenden Identifikator temporär zwischengespeichert. Ein solcher Identifikator kann beispielsweise durch Kombination des Zeitschlitzes (Zeitstempel), in welchem das Photon bei dem, den durch dieses Photon vermittelten Verschränkungszustand empfangenden Netzwerkknoten 1₁, 1₂, ... 1ₙ eintrifft, mit einem Kennzeichen des Quantenkanals (Eingang OSM und/oder Frequenz), über den dieses Photon eintrifft, erzeugt werden.

Entsprechendes erfolgt bezüglich der in denselben Farben (Rot, Blau und Orange) durch Photonen zwischen den Netzwerkknoten C und B vermittelten Verschränkungszustände. Die betreffenden hierfür genutzten Quantenkanäle 2₁, 2₂, ...2ₘ (Glasfasern) werden wiederum verschiedenen Eingangsports der N x N OSM 4 zugeführt und entsprechend der für diese konfigurierten Verschaltung über jeweilige Ausgangsports der N x N OSM 4 wellenlängenselektiv den unterschiedlichen Quantenspeichern 3₁, 3₂, ...3ₖ des Netzwerkknotens B zu ihrer temporären, wiederum jeweils in Zuordnung zu einem Identifikator erfolgenden Speicherung zugeführt.

Das temporäre Zwischenspeichern der jeweiligen Verschränkungszustände unter Zuordnung zu einem jeweiligen Identifikator dient hierbei gewissermaßen einer zeitlichen Synchronisation. Durch diese zeitliche Synchronisation wird sichergestellt, dass in einer respektive derselben Wellenlänge einerseits zwischen dem Netzwerkknoten A und dem Netzwerkknoten B sowie andererseits zwischen dem Netzwerkknoten C und dem Netzwerkknoten B vermittelte Verschränkungszustände zeitgleich einer Bell-Zustandsmessung durch eine BSMU 5₁ - 5ₚ des Netzwerkknotens B zugeführt werden können. Entsprechendes gilt für die durch Photonen der anderen Wellenlängen vermittelten Verschränkungszustände.

Die sich insoweit vollziehenden Vorgänge, nämlich die Vorgänge des Auswählens von temporär in einem Quantenspeicher 3₁, 3₂, ...3ₖ gespeicherten Verschränkungszuständen und der Start einer jeweiligen Bell-Zustandsmessung werden durch den klassischen Computer 6 des hinsichtlich seiner wesentlichen Komponenten in einer schematisierten Detaildarstellung gezeigten Netzwerkknotens B im Zusammenwirken mit dem (hier nicht gezeigten) übergeordneten Netzwerkmanagement zeitlich gesteuert. Durch diese klassische Computereinheit 6 wird dann auch das Ergebnis einer jeweiligen Bell-Zustandsmessung über die den Quantenkanälen 3₁, 3₂, ...3ₖ zugeordneten (nicht gezeigten) klassischen Protokollkanäle den Netzwerkknoten A und C zugeleitet, wodurch eine einerseits ursprünglich zwischen dem Netzwerkknoten A und dem Netzwerkknoten B und andererseits eine ursprünglich zwischen dem Netzwerkknoten C und dem Netzwerkknoten B bestehende Verschränkungsbeziehung nach dem Prinzip des Entanglement Swapping auf die Netzwerkknoten A und C geswappt wird, so dass die bis hierhin untereinander nicht in einer Verschränkungsbeziehung stehenden Netzwerkknoten A und C nunmehr ebenfalls untereinander in einer Verschränkungsbeziehung stehen.

Das Resultat mehrerer solcher Swapping-Vorgänge ist beispielhaft in einer Symboldarstellung in der Fig. 3a gezeigt. Demnach bestehen nach entsprechenden Swapping-Vorgängen dann zwischen den Netzwerkknoten A und C Verschränkungsbeziehungen aufgrund photonischer, in den Farben Rot, Blau und Orange vermittelter quantenmechanischer Verschränkungszustände.

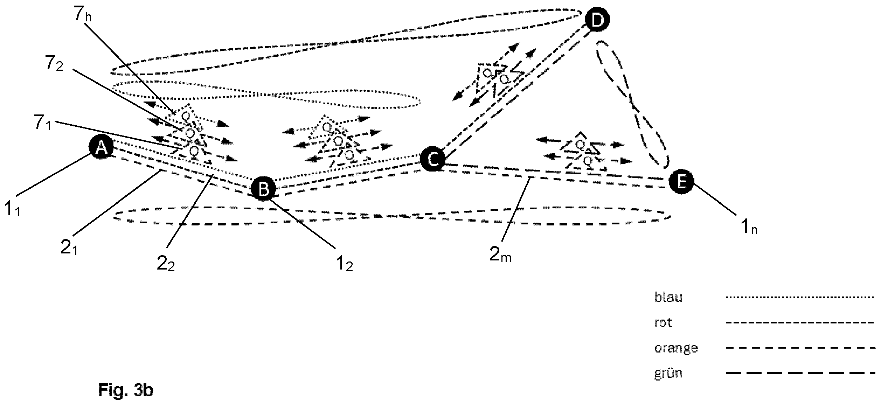

In der Fig. 3b sind beispielhaft ein möglicher Fortgang entsprechender Swapping-Vorgänge und das hierdurch bewirkte Weitergeben von Verschränkungsbeziehungen gezeigt. In der Konsequenz bestehen letztlich, wie ersichtlich, zwischen jedem der fünf gezeigten Netzwerkknoten 1₁, 1₂, ... 1ₙ A bis E des Quantennetzwerks und jedem anderen dieser Netzwerkknoten 1₁, 1₂, ... 1ₙ direkte, in unterschiedlichen Wellenlängen photonisch vermittelte Verschränkungsbeziehungen. Das heißt, jeder Netzwerkknoten 1₁, 1₂, ... 1ₙ des Quantennetzwerks ist mit jedem anderen Netzwerkknoten in einer Verschränkungsbeziehung.

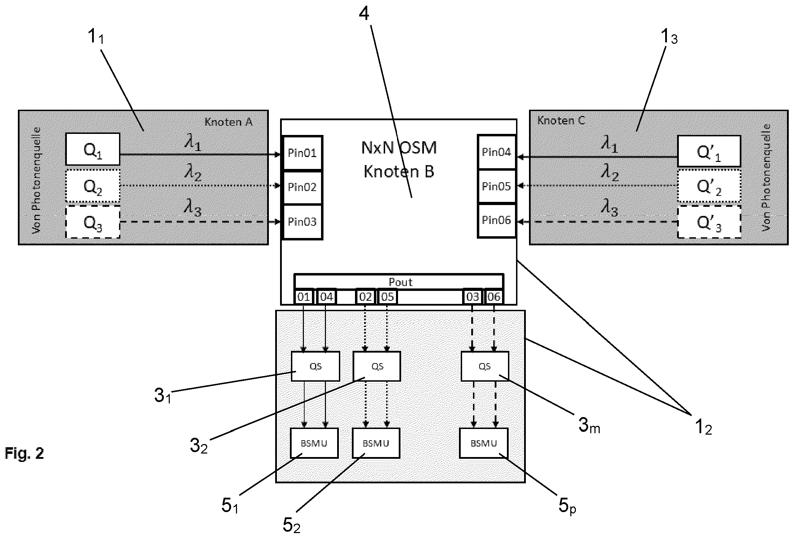

Die Fig. 2 zeigt den in der Fig. 1 bezüglich seines Aufbaus nur grobschematisch dargestellten Netzwerkknoten B und dessen in dem Quantennetzwerk über jeweils mehrere Quantenkanäle 2₁, 2₂, ...2ₘ mit den Netzwerkknoten A und C bestehende Verbindungen nochmals in einer etwas detaillierteren Darstellung. Wie zu erkennen, sind von den beiden Netzwerkknoten A und C jeweils drei, photonische Verschränkungszustände mit unterschiedlichen Wellenlängen vermittelnde Glasfasern auf separate Eingangsports der N x N OSM 4 geführt. Demgemäß sind der Netzwerkknoten A über die Eingangsports Pᵢₙ₁ bis Pᵢₙ₃ und der Netzwerkknoten B über die Eingangsports Pᵢₙ₄ bis Pᵢₙ₆ mit der N x N OSM 4 des Netzwerkknotens B verbunden. Die über diese Verbindungen respektive Quantenkanäle vermittelten photonischen Verschränkungszustände werden, aufgrund der festgelegten Konfiguration, entsprechend den genutzten Wellenlängen (Rot, Blau und Orange) auf unterschiedliche Ausgangsports (Pₒᵤₜ) der N x N OSM 4 geschaltet und über diese wellenlängenrichtig unterschiedlichen Quantenspeichern 3₁, 3₂, ...3ₖ des Netzwerkknotens B zugeleitet. Jedem dieser Quantenspeicher 3₁, 3₂, ... 3ₖ ist eine eigene BSMU 5₁ - 5ₚ zugeordnet, durch welche für in dem jeweiligen Quantenspeicher 3₁, 3₂, ...3ₖ temporär gespeicherte Verschränkungszustände bei ihrem Abruf zur Verwendung für ein Entanglement Swapping eine Bell-Zustandsmessung aufgeführt wird. In der stärker schematisierten Darstellung der Fig. 1 sind die mehreren BSMU 5₁ - 5ₚ insoweit vereinfachend nur durch ein gemeinsames Symbol dargestellt. Die anderen in der Fig. 1 zu sehenden Netzwerkknoten A, C, D und E weisen einen identischen oder vergleichbaren Aufbau auf.

Bei der zuvor beispielhaft betrachteten Konfiguration werden die quantenmechanischen Verschränkungsbeziehungen, die zwischen Netzwerkknoten 1₁, 1₂, ... 1ₙ des Quantennetzwerks aufgrund von Verschränkungszuständen bestehen, welche durch Photonen unterschiedlicher Wellenlänge vermittelt werden, jeweils über verschiedene Quantenkanäle2₁, 2₂, ...2ₘ, nämlich über je einen Quantenkanal je photonischer Wellenlänge, etabliert. Dies hat unter anderem den Vorteil, dass die im Rahmen ausgeführter Übertragungsprotokolle zu kontrollierenden Quantenzustände und deren Vermittlung über die separaten Quantenkanäle 2₁, 2₂, ...2ₘ etwas einfacher zu kontrollieren ist.

Allerdings ist hiermit der Nachteil verbunden, dass die in den einzelnen Netzwerkknoten 1₁, 1₂, ... 1ₙ des Quantennetzwerks angeordneten N x N OSM 4 über eine sehr große Anzahl von Eingangsports verfügen muss. Mit steigender Anzahl von Eingangsports erhöhen sich aber die Kosten für dieses ohnehin bereits sehr teure Element sehr stark. Daher wird eine Konfiguration zu bevorzugen sein, bei welcher die durch Photonenpaare unterschiedlicher Wellenlänge vermittelten Verschränkungszustände, aufgrund welcher entsprechende Verschränkungsbeziehungen zwischen den Netzwerkknoten 1₁, 1₂, ... 1ₙ bestehen, über eine gemeinsame Faser vermittelt werden, zumal sich hierdurch außerdem Faserverbindungen und damit weitere Kosten einsparen lassen.

Dies lässt sich dadurch realisieren, dass in den einzelnen Netzwerkknoten 1₁, 1₂, ... 1ₙ jeweils mindestens ein passiver optischer Multiplexer 8 und eine der Anzahl der Ausgangsports der N x N-Switchmatrix 4 entsprechende Anzahl von passiven optischen Demultiplexern 9₁, 9₂, ... 9_{g} vorgesehen wird. Hierbei ist der vorgenannte Multiplexer 8 dazu ausgebildet, quantenmechanische Verschränkungszustände vermittelnde Photonen unterschiedlicher Wellenlänge nach dem Prinzip des Dense Wavelength Division Multiplexing (DWDM) zusammenzuführen und demselben, den jeweiligen Netzwerkknoten 1₁, 1₂, ... 1ₙ mit einem anderen Netzwerkknoten 1₁, 1₂, ... 1ₙ des Quantennetzwerks verbindenden Quantenkanal als Wellenlängenmultiplex-Signal zuzuführen.

Insoweit bei einem Netzwerkknoten1₁, 1₂, ... 1ₙ, nämlich auf einen gemeinsamen Eingangsport der N x N-Switchmatrix 4 geführte wellenlängenmultiplexe Signale, werden durch die N x N-Switchmatrix 4 jeweils auch als Multiplexsignal auf einen ihrer Ausgangsports durchgeschaltet. Erst danach erfolgt ein Demultiplexing eines jeweiligen Signals durch einen jeweiligen Demultiplexer 9₁, 9₂, ... 9_{g}, wobei jedem der Ausgangsports der N x N OSM 4 ein entsprechender Demultiplexer 9_{1,} 9₂, ... 9_{g} zugeordnet ist. Durch die einzelnen Demultiplexer 9₁, 9₂, ... 9_{g} wiederum werden die Signale unterschiedlicher Wellenlänge aufgrund entsprechender Verschaltung ihrer Ausgangsports mit den Eingängen der Quantenspeicher 3₁, 3₂, ...3ₖ wellenlängenrichtig den Quantenspeichern 3₁, 3₂, ...3ₖ zugeführt.

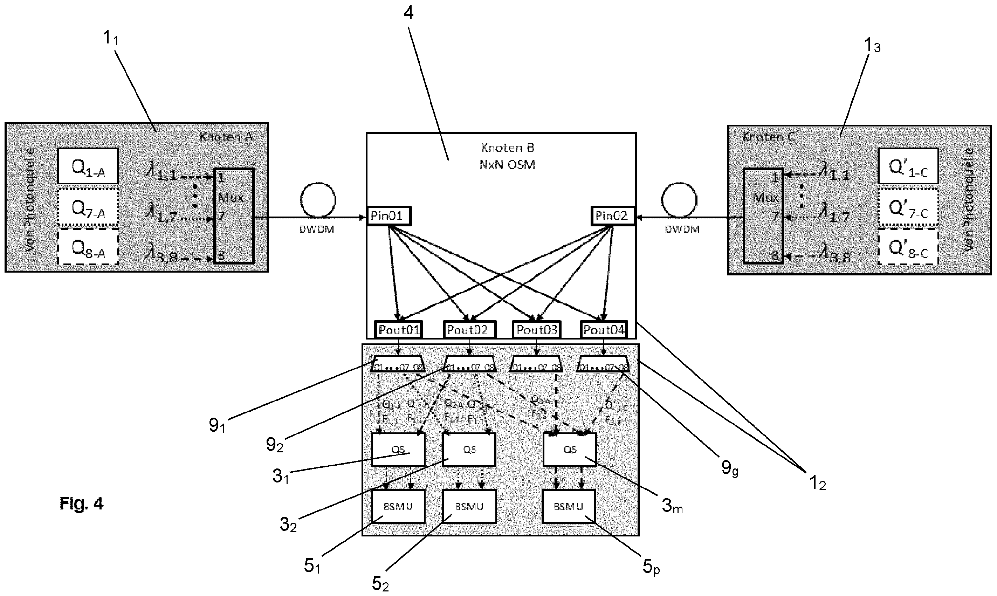

Entsprechendes wird durch die Fig. 4 veranschaulicht, für eine grundsätzlich mit der Fig. 1 vergleichbare, aber unter Nutzung eines Wellenlängenmultiplexing betriebenen Konfiguration. Auch diese Figur zeigt einen Ausschnitt eines Quantennetzwerks, in welchem durch ein in einem Netzwerkknoten B erfolgendes Entanglement Swapping zwischen bis dahin nicht in einer Verschränkungsbeziehung stehenden Netzwerkknoten A und C eine oder mehrere entsprechende Verschränkungsbeziehungen etabliert respektive an diese Netzwerkknoten A und C weitergegeben werden. Jedoch sind die Netzwerkknoten A und B sowie C und B hier nur durch eine Glasfaser miteinander verbunden.

In der gezeigten Darstellung ist hierbei der Netzwerkknoten B im Vergleich zur Fig. 1 in Bezug auf seine entsprechend modifizierte Ausbildung etwas detaillierter dargestellt. Wie aus der Fig. 4 erkennbar, weisen ferner die Netzwerkknoten A und C auf der jeweiligen Seite ihrer Verbindungen mit dem Netzwerkknoten B, einen entsprechenden Multiplexer 8 auf, bei welcher jeweils in einem Verschränkungszustand stehende Photonen unterschiedlicher Wellenlänge Verschränkungsbeziehungen wellenlängenunabhängig über eine gemeinsame, mit einem Eingangsport der N x N OSM 4 des Netzwerkknotens B verbundene Faser vermitteln. Die an das Symbol für die Wellenlänge λ angetragenen Indizes bezeichnen jeweils mit ihrer ersten Ziffer das Band/Kanal im 1.550 nm C-Band und mit der zweiten Ziffer den Subkanal (Subchanel), wobei in der Zeichnung beispielhaft nur drei der typischerweise viel mehr Wellenlängen angegeben sind.

Von den einerseits mit dem Netzwerkknoten A und andererseits mit dem Netzwerkknoten B verbundenen Eingangsports der N x N OSM 4 werden die Wellenlängenmultiplex-Signale zeitmultiplex (entsprechend dem für die N x N OSM 4 konfigurierten Schaltregime) unterschiedlichen Ausgangspots der N x N OSM 4 zugeleitet. Die über die Ausgangsports der N x N OSM 4 geführten Wellenlängenmultiplex-Signale werden dabei durch jeweils einen Demultiplexer in ihre einzelnen Farben respektive Photonenwellenlängen aufgefächert und durch entsprechende Verschaltung der Ausgangsports des Demultiplexers 9₁, 9₂, ... 9_{g} wellenlängenrichtig dem jeweiligen Quantenspeicher 3₁, 3₂, ...3ₖ zugeführt.

Die Auswahl temporär in den Quantenspeichern 3₁, 3₂, ...3ₖ gespeicherter Verschränkungszustände für ein Entanglement Swapping und die Durchführung jeweiliger Bell-Zustandsmessungen für diese Verschränkungszustände sowie die Übertragung des aus einer jeweiligen Bell-Zustandsmessung resultierenden Ergebnisses an die Netzwerkknoten A und C und das hierdurch bewirkte Entanglement Swapping wird wiederum durch den klassischen Computer 6 des Netzwerkknotens B im Zusammenwirken mit dem (nicht gezeigten) übergeordneten Netzwerkmanagement gesteuert.

Bisher wurden mit Blick auf die zuvor beschriebenen Figuren jeweils Konfigurationen betrachtet, in deren Rahmen photonische Verschränkungszustände und die auf ihnen basierenden Verschränkungsbeziehungen durch Photonen unterschiedlicher Wellenlänge vermittelt wurden. Wie aber bereits früher ausgeführt, ist es (sicherlich abhängig von der Größe eines jeweiligen Netzwerks, aber möglicherweise auch von anderen Gegebenheiten) grundsätzlich auch möglich, dass Verschränkungszustände in einem entsprechenden Quantennetzwerk ausschließlich durch Photonen einer Wellenlänge vermittelt werden.

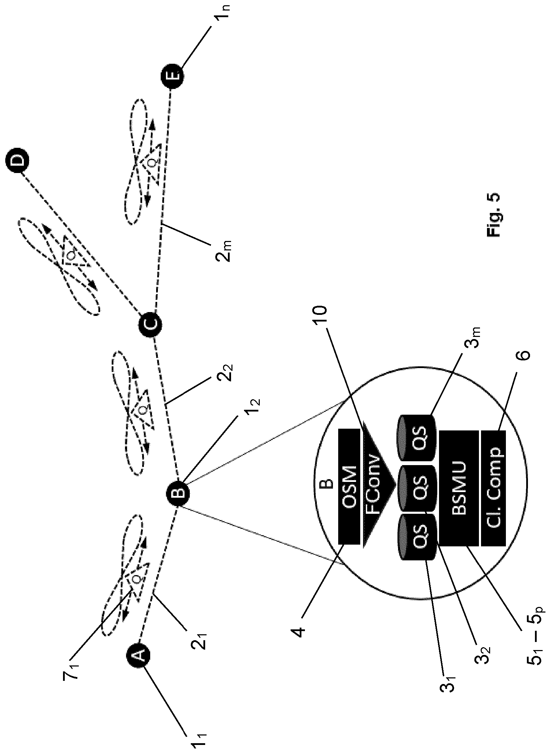

Dies wird beispielhaft in der Fig. 5 gezeigt. Auch in dieser Figur sind wiederum die Elemente eines Netzwerkknotens1₁, 1₂, ... 1ₙ, nämlich des Netzwerkknotens B, in einer stark vereinfachten Darstellung gezeigt. Das Symbol QS (Quantenspeicher) steht hierbei, aus schematischer Sicht gewissermaßen zusammengefasst, für mehrere in dem Netzwerkknoten B angeordnete Quantenspeicher 3₁, 3₂, ...3ₖ. In der Darstellung ist jedoch noch ein weiteres in dem Netzwerkknoten B, jedenfalls gemäß dieser beispielhaften Ausführungsform, vorhandenes Element gezeigt. Es handelt sich hierbei um einen Frequenzkonverter 10 (FConv). Dieser Frequenzkonverter 10 trägt der Tatsache Rechnung, dass heute typischerweise die für die Quantenkanäle 2₁, 2₂, ...2ₘ verwendeten Faserverbindungen für eine Frequenz respektive Wellenlänge (1.550 nm) im sogenannten optischen C-Band ausgelegt sind, welche von der Speicherfrequenz derzeit beziehungsweise in absehbarer Zeit verfügbarer beziehungsweise realisierbar erscheinender Quantenspeicher 3₁, 3₂, ...3ₖ abweicht. Wegen dieser Abweichung wird die Frequenz der an den Ausgängen der N x N OSM 4 anstehenden Signale mittels des Frequenzkonverters 10 an die Speicherfrequenz der einzelnen Quantenspeicher 3₁, 3₂, ...3ₖ angepasst. Die entsprechende Frequenzanpassung erfolgt dabei ohne Zerstörung bestehender Verschränkungszustände.

Unabhängig davon, dass sich die Fig. 5 auf die Verwendung nur einer photonischen Wellenlänge bezieht, besteht aber - jedenfalls nach derzeitigem Stand - das Problem einer von den Speicherfrequenzen der Quantenspeicher 3₁, 3₂, ...3ₖ abweichenden Übertragungsfrequenz der Glasfasern auch beim Einsatz unterschiedlicher Wellenlängen für die photonisch vermittelten Verschränkungszustände. Demnach wird typischerweise auch in diesen Fällen (also beispielsweise auch bei den Konfigurationen gemäß der Fig. 1 und 4, wenn auch in den gezeigten Beispielen nicht dargestellt) zwischen einem jeweiligen Ausgangsport der N x N OSM 4 beziehungsweise - im Falle der Nutzung des DWDM - zwischen den Ausgangsports eines jeweiligen Demultiplexers 9₁, 9₂, ... 9_{g} und dem Eingangsport der einzelnen Quantenspeicher 3₁, 3₂, ...3ₖ jeweils ein Frequenzkonverter 10 angeordnet sein.

## Patentansprüche

1. System, nämlich für eine Weitergabe von quantenmechanisch basierten Verschränkungsbeziehungen ausgebildetes Netzwerk, mit Einrichtungen eines übergeordneten Netzwerkmanagements und einem optischen Quantennetzwerk, bestehend aus mehreren Netzwerkknoten (1₁, 1₂, ... 1ₙ) und aus mehreren optischen, jeweils mit einem zugehörigen klassischen Protokollkanal ausgestatteten Quantenkanälen (2₁, 2₂, ...2ₘ) zur Verbindung dieser Netzwerkknoten (1₁, 1₂, ... 1ₙ), von denen jeder mit mindestens einem anderen Netzwerkknoten (1₁, 1₂, ... 1ₙ) des Quantennetzwerks in mindestens einer, aufgrund eines photonisch vermittelten quantenmechanischen Verschränkungszustands bestehenden Verschränkungsbeziehung steht, **dadurch gekennzeichnet, dass** das Netzwerk ergänzend zu dem Quantennetzwerk ein klassisches Netzwerk umfasst, in welches jeder Netzwerkknoten (1₁, 1₂, ... 1ₙ) des Quantennetzwerks einbezogen ist und dass jeder Netzwerkknoten (1₁, 1₂, ... 1ₙ) des Quantennetzwerks mindestens umfasst
- mehrere Quantenspeicher (3₁, 3₂, ...3ₖ) zur temporären Speicherung von Verschränkungszuständen, nämlich verschränkter, photonisch vermittelter Quantenzustände unter einem sie jeweils bezeichnenden Identifikator;
- eine mehrere Eingänge und mehrere Ausgänge aufweisende passive optische N x N-Switchmatrix (4), über welche verschränkte, photonisch vermittelte Quantenzustände entsprechend einer für die optische N x N-Switchmatrix (4) konfigurierten Verschaltung ihrer Ein- und Ausgänge jeweils einem der mehreren Quantenspeicher (3₁, 3₂, ...3ₖ) des Netzwerkknotens (1₁, 1₂, ... 1ₙ) unmittelbar oder mittelbar zugeleitet werden;
- mindestens eine Einheit zur Durchführung von Bell-Zustandsmessungen BSMU (5₁, 5₂, ...5ₚ) für ein Entanglement Swapping;
- eine klassische, zur Steuerung der Weitergabe von Verschränkungsbeziehungen durch Entanglement Swapping mit dem übergeordneten Netzwerkmanagement zusammenwirkende Computereinrichtung (6), welche dazu ausgebildet und eingerichtet ist, die Quantenspeicher (3₁, 3₂, ...3ₖ) zur Auswahl der jeweils für die Weitergabe einer Verschränkungsbeziehung zu verwendenden, gespeicherten Verschränkungszustände und die mindestens eine BSMU (5₁, 5₂, ...5ₚ) zur Durchführung von Bell-Zustandsmessungen an den jeweils ausgewählten Verschränkungszuständen anzusteuern sowie das Ergebnis einer jeweiligen Bell-Zustandsmessung entsprechend einer durch das übergeordnete Netzwerkmanagement festgelegten Route mindestens zwei bis dahin untereinander nicht in einer Verschränkungsbeziehung stehenden Netzwerkknoten (1₁, 1₂, ... 1ₙ) über klassische Kanäle des Quantennetzwerks zuzuleiten.

2. System nach Anspruch 1, **dadurch gekennzeichnet, dass** es sich bei der in einem jeweiligen Netzwerkknoten (1₁, 1₂, ... 1ₙ) des Quantennetzwerks angeordneten optischen N x N-Switchmatrix (4) um eine aktiv schaltbare, nichtblockierende Switchmatrix (4) handelt und das Quantennetzwerk, einschließlich der Verschaltung der Ein- und Ausgänge der von den Netzwerkknoten (1₁, 1₂, ... 1ₙ) jeweils umfassten optischen N x N-Switchmatrix (4), mittels Einrichtungen des übergeordneten Netzmanagements nach dem Prinzip des Software Defined Networking rekonfigurierbar ist.

3. System nach Anspruch 1 oder 2, **dadurch gekennzeichnet, dass** innerhalb eines aus zwei Netzwerkknoten (1₁, 1₂, ... 1ₙ) und einen sie verbindenden Quantenkanal (2₁, 2₂, ...2ₘ) bestehenden Quantenlinks mindestens eine Photonenquelle (7₁, 7₂, ... 7ₕ) angeordnet ist, welche dazu ausgebildet ist, Photonen zu erzeugen, die paarweise hinsichtlich eines Quantenzustands verschränkt sind, sowie an jeden der beiden Netzwerkknoten (1₁, 1₂, ... 1ₙ) jeweils ein Photon eines jeweiligen Paares hinsichtlich eines Quantenzustands miteinander verschränkter Photonen auszusenden, wodurch zwischen den sie empfangenden Netzwerkknoten (1₁, 1₂, ... 1ₙ) eine Verschränkungsbeziehung entsteht, wobei die mindestens eine Photonenquelle (7₁, 7₂, ... 7ₕ) auch innerhalb eines der Netzwerkknoten (1₁, 1₂, ... 1ₙ) des Quantenlinks angeordnet sein kann.

4. System nach Anspruch 1 oder 2, **dadurch gekennzeichnet, dass** innerhalb eines ersten Netzwerkknotens (1₁, 1₂, ... 1ₙ) ein gleichzeitig auch eine Quantenquelle ausbildender Quantenspeicher (3₁, 3₂, ...3ₖ) ausgebildet ist, durch welchen erzeugte Quantenzustände unmittelbar persistiert und hinsichtlich eines Quantenzustands mit ihnen verschränkte Photonen über einen Quantenkanal (2₁, 2₂, ...2ₘ) an einen zweiten Netzwerkknoten (1₁, 1₂, ... 1ₙ) ausgesendet werden.

5. System nach einem der Ansprüche 1 bis 4, wobei in dem Quantennetzwerk bestehende Verschränkungsbeziehungen durch Photonen unterschiedlicher Wellenlänge und somit Frequenz vermittelt werden, **dadurch gekennzeichnet, dass** die mehreren Quantenspeicher (3₁, 3₂, ...3ₖ) eines Netzwerkknotens (1₁, 1₂, ... 1ₙ) sich hinsichtlich ihrer jeweiligen Speicherfrequenz voneinander unterscheiden.

6. System nach Anspruch 5, bei dem zumindest zwischen einigen Netzwerkknoten (1₁, 1₂, ... 1ₙ) des Quantennetzwerks mehrere Verschränkungsbeziehungen aufgrund mehrerer, durch Photonen unterschiedlicher Wellenlängen gemeinsam über einen Quantenkanal (2₁, 2₂, ...2ₘ) vermittelter quantenmechanischer Verschränkungszustände bestehen, **dadurch gekennzeichnet, dass** die Netzwerkknoten (1₁, 1₂, ... 1ₙ) des Quantennetzwerks jeweils einen passiven optischen Multiplexer (8) und eine der Zahl der Ausgangsports der N x N-Switchmatrix (4) entsprechende Anzahl von passiven optischen Demultiplexern (9₁, 9₂, ... 9_{g}) umfassen, wobei der Multiplexer (8) dazu ausgebildet ist, quantenmechanische Verschränkungszustände vermittelnde Photonen unterschiedlicher Wellenlänge nach dem Prinzip des Dense Wavelength Division Multiplexing DWDM zusammenzuführen und demselben, den jeweiligen Netzwercknoten (1₁, 1₂, ... 1ₙ) mit einem anderen Netzwerkknoten (1₁, 1₂, ... 1ₙ) des Quantennetzwerks verbindenden Quantenkanal (2₁, 2₂, ...2ₘ) als Wellenlängenmultiplex-Signal zuzuführen und wobei die Ausgänge der Demultiplexer (9₁, 9₂, ... 9_{g}), welche bei dem Netzwerkknoten (1₁, 1₂, ... 1ₙ) eingehende sowie dessen N x N-Switchmatrix (4) passierende Wellenlängenmultiplex-Signale zur photonischen Vermittlung von Verschränkungszuständen wieder in Einzelsignale jeweils unterschiedlicher Photonenwellenlänge zerlegen, mit den verschiedenen Quantenspeichern (3₁, 3₂, ...3ₖ) entsprechend deren jeweiliger Speicherfrequenz wellenlängenrichtig verschaltet sind.

7. System nach einem der Ansprüche 1 bis 6, **dadurch gekennzeichnet, dass** in den Netzwerkknoten (1₁, 1₂, ... 1ₙ) des Quantennetzwerks zwischen den Ausgängen der N x N-Switchmatrix (4) und den Quantenspeichern (3₁, 3₂, ...3ₖ) oder zwischen den Ausgängen der Demultiplexer (9₁, 9₂, ... 9_{g}) und den Quantenspeichern (3₁, 3₂, ...3ₖ) Frequenzkonverter (10) angeordnet sind, durch welche die Frequenz Verschränkungszustände photonisch vermittelnder Signale unter Beibehaltung des jeweils durch sie vermittelten quantenmechanischen Verschränkungszustandes verändert wird.

8. System nach einem der Ansprüche 1 bis 7, **dadurch gekennzeichnet, dass** mindestens ein Quantenspeicher (3₁, 3₂, ...3ₖ) eines Netzwerkknotens (1₁, 1₂, ... 1ₙ) durch eine Atomfalle ausgebildet ist.

9. System nach Anspruch 8, **dadurch gekennzeichnet, dass** mindestens ein Quantenspeicher (3₁, 3₂, ...3ₖ) eines Netzwerkknotens (1₁, 1₂, ... 1ₙ) durch eine Pauli-Falle ausgebildet ist.

10. System nach einem der Ansprüche 1 bis 9, **dadurch gekennzeichnet, dass** mindestens ein Quantenspeicher (3₁, 3₂, ...3ₖ) eines Netzwerkknotens (1₁, 1₂, ... 1ₙ) durch einen Diamantenpunkt ausgebildet ist.

11. System nach einem der Ansprüche 1 bis 10, **dadurch gekennzeichnet, dass** mindestens ein Quantenspeicher (3₁, 3₂, ...3ₖ) eines Netzwerkknotens (1₁, 1₂, ... 1ₙ) durch einen Quantenpunkt ausgebildet ist.

12. System nach einem der Ansprüche 1 bis 11, **dadurch gekennzeichnet, dass** mindestens ein Quantenspeicher (3₁, 3₂, ...3ₖ) eines Netzwerkknotens (1₁, 1₂, ... 1ₙ) durch einen in diesem angeordneten, eine konfigurierbare optische Verzögerungsstrecke darstellenden Glasfaserabschnitt ausgebildet ist.
